# EUROPÄISCHE PATENTANMELDUNG

(11) **EP 1 136 813 A2**
(43) Veröffentlichungstag der Anmeldung: **26.09.2001**
(21) Anmeldenummer: 01106577.8
(22) Anmeldetag: 15.03.2001
(51) Int. Cl.: G01N 21/49

(54) **Vorrichtung zur Streustrahlungsmessung**

(30) Priorität: 15.03.2000 DE 10012613
(71) Anmelder: WTW Wissenschaftlich-Technische Werkstätten GmbH & Co. KG, 82362 Weilheim (DE)
(72) Erfinder: Probst, Markus, 82380 Peissenberg (DE)
(74) Vertreter: Zipse + Habersack

(57) **Zusammenfassung**

Die Erfindung betrifft eine Vorrichtung zur Durchführung von Streustrahlungsmessungen in Fluiden, umfassend einen Sender (1), z.B. eine Lichtquelle, zur Abgabe von Strahlung in das Fluid (5), einen Detektor (2) zur Erfassung von Streustrahlung in dem Fluid, mindestens eine zwischen Fluid und Sender als auch zwischen Fluid und Detektor vorgesehene strahlungsdurchlässige Abtrennung (4),
dadurch gekennzeichnet,
daß zwischen dem Sender und der Abtrennung und/oder zwischen dem Detektor und der Abtrennung wenigstens ein optisches Umlenkelement (8,9) vorgesehen ist, um den emittierten Strahl/den Streustrahl zum Lot auf die Abtrennung hin umzulenken. Diese Streustrahlungsmessanordnung zeichnet sich durch sehr kompakte Bauweise aus.

## Beschreibung

Die vorliegende Erfindung betrifft eine Vorrichtung zur Durchführung von Streustrahlungsmessungen in Fluiden, insbesondere Flüssigkeiten.

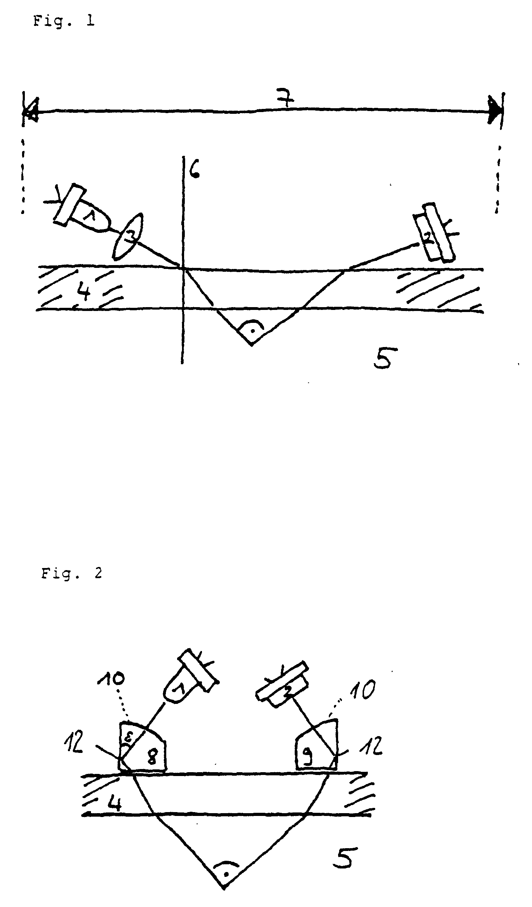

Bei derartigen Streustrahlungsmessungen, die in der Regel im Bereich des sichtbaren Licht oder des nahen Infrarots durchgeführt werden, ist ein Sender, in der Regel eine Lichtquelle, ein Detektor und eine Abtrennung vorgesehen, die den Sender als auch den Detektor gegen die Flüssigkeit abschirmt. Die Abtrennung ist strahlungsdurchlässig und in der Regel als Glasscheibe, Saphirscheibe oder durchsichtige Kunststoffscheibe ausgebildet. Eine derartige Anordnung ist in Fig. 1 wiedergegeben. Das von der Lichtquelle 1 kommende Licht wird durch eine optische Linse 3 parallel gerichtet und tritt nach Durchdringen der Glasscheibe 4 in die zu messende Flüssigkeit ein. Die aufgrund von Verschmutzungsparametern, z.B. der Trübung in der Flüssigkeit auftretende Streustrahlung wird von dem Detektor 2 erfaßt, wobei der Strahlengang der detektierten Streustrahlung ebenfalls dargestellt ist. Da die Strahlung beim Eintritt in die Glasscheibe 4 zum Lot abgelenkt wird und dieser Vorgang an der Grenzfläche der Scheibe zum Meßmedium aufgrund des geringeren Brechkraftunterschiedes zwischen Scheibe und Medium im Vergleich zum Unterschied Luft-Scheibe nicht aufgehoben wird und beim Austritt aus der Glasscheibe 4 in Richtung auf den Detektor 2 vom Lot weggebrochen wird, ergibt sich eine Anordnung mit einer relativ großen Länge 7, die daraus resultiert, dass die detektierte Strahlung etwa 90° im Verhältnis zum in die Flüssigkeit 5 eingestrahlten Lichtstrahl stehen muß.

Es ist daher Ziel der vorliegenden Erfindung, eine Vorrichtung zur Streustrahlungsmessung kompakter gestalten zu können. Diese Aufgabe wird erfindungsgemäß durch die Merkmale des Anspruchs 1 gelöst. Vorteilhafte Weiterbildungen der Erfindung sind Gegenstand der Unteransprüche.

Erfindungsgemäß wird in den Strahlengang zwischen Sender und Abtrennung und/oder zwischen Abtrennung und Detektor wenigstens ein optisches Umlenkelement vorgesehen, das den Strahl zum Lot hin ablenkt. Auf diese Weise können der Sender und der Detektor viel näher beieinander angeordnet werden. Dies führt zu einer kompakteren Abmessung der gesamten Vorrichtung.

Ein weiterer Vorteil der neuen Anordnung besteht darin, dass weniger Reflexionsverluste als bei der bekannten Vorrichtung nach Figur 1 auftreten. Bei dieser müssen der Sender als auch der Detektor in einem sehr flachen Winkel zur Scheibe angeordnet werden, was zum einen einen gewissen Reflexionsanteil beim Eintritt des Strahls in die Scheibe 4 mit sich bringt und zum anderen einen gewissen Reflexionsanteil innerhalb der Scheibe 4 beim Übertritt von der Scheibe 4 in den Raum vor dem Detektor 2. Durch das Umlenkelement kann der emittierte Lichtstrahl bzw. der empfangene Streulichtstrahl senkrecht durch eine optische Fläche des Umlenkelements ein- bzw. austreten, womit der Reflexionsanteil des eingestrahlten und detektierten Lichtes minimiert wird.

Vorzugsweise ist das Umlenkelement als Umlenkprisma ausgebildet, das vorzugsweise an einer Seite direkt auf der Abtrennung aufliegt. Das Umlenkelement kann auch einstückig mit der Abtrennung ausgebildet sein. In jedem Fall sollte eine dichte Anlage zwischen Umlenkelement und Abtrennung realisiert werden, damit Umlenkungen des Lichtstrahles zwischen diesen beiden Komponenten vermieden werden und der Lichtstrahl weitgehend unabgelenkt von dem Umlenkelement in die Abtrennung und vice versa geführt wird. Vorzugsweise besteht daher das Umlenkelement aus einem Material mit zumindest ähnlichem Brechungsindex wie die Abtrennung. Das Umlenkelement kann aus einem oder mehreren Teilen bestehen.

Vorzugsweise ist die dem Detektor als auch der Lichtquelle zugewandte Austritts-/Eintrittsfläche des Umlenkelements in Art einer nichtebenen Oberfläche ausgebildet. Die Fläche kann asphärisch, in Form eines Kreisbogens oder als Kugeloberfläche ausgebildet sein. Auf diese Weise kann die Lichtquelle bzw. der Detektor in einem gewissen Winkelbereich um den Umlenkpunkt verschwenkt angeordnet werden, wobei sichergestellt ist, dass der Lichtstrahl immer senkrecht die Eintritts-/Austrittsfläche durchdringt. Eine derartige Anordnung erlaubt eine größere Freiheit in der Anordnung des Senders/Detektors. Vorzugsweise ist sowohl im Strahlengang zwischen dem Sender und der Abtrennung als auch im Strahlengang zwischen der Abtrennung und dem Detektor ein optisches Umlenkelement vorgesehen, wodurch der Strahl vor dem Eintritt in das Fluid als auch das vom Fluid abgestrahlte Streulicht in der Strahlführung optimiert werden können.

Das Umlenkelement hat, wie bereits ausgeführt, im Strahleintritts-/-austrittsbereich eine Fläche, die im Wesentlichen senkrecht zur Strahlrichtung orientiert ist. Die Umlenkung kann im Umlenkelement an ein oder mehreren Umlenkflächen erfolgen. Wenn die Auftreffwinkel auf die Umlenkflächen so groß sind, dass ein Strahldurchtritt nach außen zu befürchten ist, können die Umlenkflächen außen verspiegelt sein, um auf diese Weise eine zwangsläufige Reflexion des Strahles im Inneren des Umlenkelements sicherzustellen. Zudem können mehrere Umlenkflächen verwendet werden, so dass der Auftreffwinkel des Strahls auf die Fläche klein gehalten werden kann, was wiederum die Strahlführung unter den Bedingungen der Totalreflexion an den Umlenkflächen erlaubt.

Die Erfindung wird nachfolgend beispielsweise anhand der schematischen Zeichnung in den Figuren 2 bis 6 erläutert. Figur 1 zeigt eine gängige Komponentenanordnung nach dem Stand der Technik, die in der Beschreibungseinleitung bereits gewürdigt wurde. Es zeigen:
- Fig. 2: eine Vorrichtung zur Streulichtmessung mit zwei optischem Umlenkelementen in Seitenansicht,
- Fig. 3: die Anordnung aus Figur 2 von der Fluid-Seite aus,
- Fig. 4: eine gegenüber Figur 3 veränderte Anordnung, bei der die Lichtquelle und der Detektor aus der Ebene des Lichtstrahls im Fluid versetzt sind,
- Fig. 5: eine Anordnung mit zwei optischen Umlenkelementen und gekreuzten Strahlen und
- Fig. 6: eine Seitenansicht einer optischen Anordnung mit Ausrichtung der Lichtquelle und des Detektors parallel zur Abtrennung.

Fig. 2 zeigt eine gegenüber Fig. 1 wesentlich kompaktere erfindungsgemäße Messanordnung, bei der im Strahlengang zwischen der Lichtquelle 1 und Trennscheibe 4 als auch zwischen der Trennscheibe 4 und dem Detektor 2 jeweils ein optisches Umlenkelement in Form eines Umlenkprismen 8, 9 vorgesehen ist. Die Prismen 8, 9 haben an ihrer der Lichtquelle 1 bzw. dem Detektor 2 zugewandten Seite eine Kugelfläche 10. Die Lichtquelle 1 und der Detektor 2 sind so angeordnet, daß ihre optische Achse den Kugelmittelpunkt der jeweiligen Fläche trifft. Wie aus der Zeichnung deutlich zu sehen ist, ist die Anordnung der Fig. 2 deutlich kompakter als die bekannte Anordnung der Figur 1.

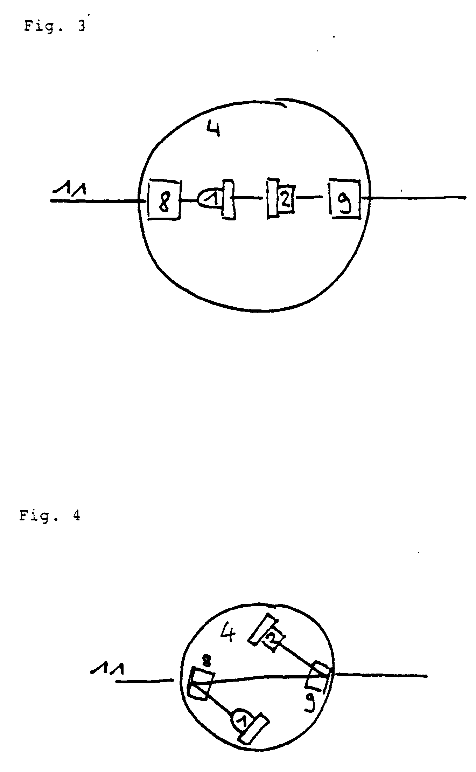

Die in Fig. 2 gezeigte Abbildung ist in Fig. 3 in der Ansicht von der Fluidseite 5 aus wiedergegeben. Man sieht eine in etwa kreisrunde Trennscheibe 4, hinter der sich das erste und zweite Umlenkprisma 8, 9 als auch die Lichtquelle 1 und der Detektor 2 befinden. Obwohl diese Anordnung wesentlich kompakter als bekannte Anordnungen gemäß Fig. 1 sind, hat jedoch auch diese Anordnung in horizontaler Richtung eine gewisse Erstreckung.

Daher sind bei der Anordnung aus Fig. 4 die Lichtquelle 1 als auch der Detektor 2 versetzt zur Strahlebene des Lichtstrahls im Fluid angeordnet. Wie deutlich zu sehen ist, kann hierdurch ein sehr viel kleineres Meßfenster vorgesehen werden.

Eine weitere Verringerung der Abmessungen der gesamten Anordnung läßt sich realisieren, wenn man die Strahlengänge der Lichtquelle 1 und des vom Detektor erhaltenen Streulichts 2 sich in seitlicher Projektion kreuzen läßt. Dies führt abermals dazu, dass die Umlenkprismen 8, 9 näher beieinander angeordnet und eine entsprechend kleinere Abtrennung verwendet werden kann. Der Messpunkt für die Trübungsmessung kann hierbei sehr nahe an de Trennscheibe 4 im Fluid 5 gelegt werden.

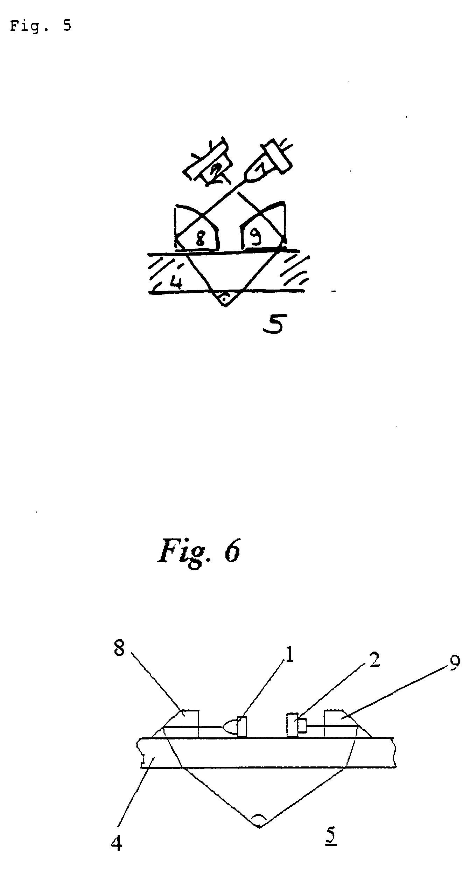

Fig. 6 zeigt wiederum die gleiche Anordnung, bestehend aus Lichtquelle 1, Detektor 2, Trennscheibe 4 und Umlenkprismen 8, 9, wobei die Lichtquelle und der Detektor parallel zur Trennscheibe 4 ausgerichtet sind, wodurch die gesamte Messanordnung eine sehr geringe Tiefe quer zur Ebene des Messfensters aufweist. Selbstverständlich können auch hier die Lichtquelle 1 und der Detektor 2 gemäß Fig. 4 versetzt zum Strahlengang angeordnet werden, wodurch sich nicht nur eine geringe Tiefe, sondern auch eine sehr kompakte Abmessung in der Ebene des Messfensters 4 erzielen läßt.

Selbstverständlich können die in den unterschiedlichen Figuren gezeigten Aspekte der Anordnung von Lichtquelle, Detektor und Umlenkprismen miteinander kombiniert werden. Die Umlenkfläche innerhalb des Prismas muß keine ebene Fläche, sondern es kann auch eine gekrümmte Fläche sein, was insbesondere beim Strahlengang vom Fluid zum Detektor 2 dazu genutzt werden kann, einen etwas diffuseren Strahlengang auf den Detektor 2 zu fokussieren. Die Umlenkprismen können auch neben ihrer eigentlichen Funktion des Umlenkens dazu verwendet werden, die Lichtstrahlen zu bündeln oder parallele Lichtstrahlen auszusondern.

## Patentansprüche

1. Vorrichtung zur Durchführung von Streustrahlungsmessungen in Fluiden, umfassend einen Sender (1), z.B. eine Lichtquelle, zur Abgabe von Strahlung in das Fluid (5), einen Detektor (2) zur Erfassung von Streustrahlung in dem Fluid, mindestens eine zwischen Fluid und Sender/Detektor vorgesehene strahlungsdurchlässige Abtrennung (4),
**dadurch gekennzeichnet,**
**daß** zwischen dem Sender und der Abtrennung und/oder zwischen dem Detektor und der Abtrennung wenigstens ein optisches Umlenkelement (8,9) vorgesehen ist, um den emittierten Strahl/den Streustrahl zum Lot auf die Abtrennung hin umzulenken.

2. Vorrichtung nach Anspruch 1,
**dadurch gekennzeichnet,**
**daß** ein erstes Umlenkelement (8) zwischen Sender und Abtrennung und ein zweites Umlenkelement (9) zwischen Abtrennung und Detektor vorgesehen sind.

3. Vorrichtung nach einem der vorhergehenden Ansprüche,
**dadurch gekennzeichnet,**
**daß** das Umlenkelement (8,9) durch ein Umlenkprisma gebildet ist.

4. Vorrichtung nach Anspruch 3,
**dadurch gekennzeichnet,**
**daß** das Umlenkprisma (8,9) eine Strahleintritts/austrittsfläche (10) aufweist, die als nichtebene asphärische Fläche im Umlenkelement ausgebildet ist.

5. Vorrichtung nach einem der vorhergehenden Ansprüche,
**dadurch gekennzeichnet,**
**daß** das optische Umlenkelement (8,9) eine Einkoppelfläche/Austrittsfläche (10) aufweist, die so angeordnet ist, daß der Mittenstrahl senkrecht einfällt/austritt und eine Umlenkfläche, die so angeordnet ist, daß der Mittenstrahl im Inneren des Umlenkelements reflektiert wird.

6. Vorrichtung nach Anspruch 5, **dadurch gekennzeichnet, daß** die Einkoppelfläche/Austrittsfläche (10) so gekrümmt ist, daß die von dem Sender emittierten/aus dem Umlenkelement austretenden Strahlen im Umlenkelement parallel zur optischen Achse der Fläche verlaufen.

7. Vorrichtung nach Anspruch 5 oder 6, **dadurch gekennzeichnet, daß** durch geeignete Wahl des Einfallswinkels (ε) und des Materials Totalreflexion an der Umlenkfläche erreicht wird.

8. Vorrichtung nach Anspruch 5, 6 oder 7, **dadurch gekennzeichnet, daß** die Einkoppelfläche/Austrittsfläche (10) eine sphärische Fläche ist.

9. Vorrichtung nach einem der vorhergehenden Ansprüche, **dadurch gekennzeichnet, daß** das Umlenkelement (8,9) zum Parallelrichten als auch Umlenken des emittierten Strahls/einfallenden Streustrahls ausgebildet ist.

10. Vorrichtung nach einem der vorhergehenden Ansprüche, **dadurch gekennzeichnet, daß** die Oberflächen des optischen Umlenkelements aus einer Kreiszylinder- oder Kugelfläche und ebenen Flächen bestehen.

11. Vorrichtung nach einem der vorhergehenden Ansprüche, **dadurch gekennzeichnet, daß** das optische Umlenkelement (8,9) direkt auf der Abtrennung (10) angeordnet ist.

12. Vorrichtung nach einem der vorangehenden Ansprüchen, **dadurch gekennzeichnet, daß** das optische Umlenkelement und die Abtrennung als miteinander verbundene oder einstückige Einheit ausgebildet sind.

13. Vorrichtung nach einem der vorangehenden Ansprüche, **dadurch gekennzeichnet, daß** sich Sender (1) und Detektor (2) nicht in einer Ebene mit den optischen Umlenkelementen (8) und (9) angeordnet sind (Fig. 4).

14. Vorrichtung nach einem der vorangehenden Ansprüche, **dadurch gekennzeichnet, daß** der Sender (1), Empfänger (2) und die optischen Bauteile (8,9) in einer Ebene liegen und sich die Stahlwege kreuzen (Fig. 5).
